# EUROPEAN PATENT APPLICATION

(11) **EP 1 972 196 A1**
(43) Date of publication of application: **24.09.2008**
(21) Application number: 07394004.1
(22) Date of filing: 23.03.2007
(51) Int. Cl.: A01N 63/00, A01P 7/04

(54) **Formulation for the biological control of insect pests**

(71) Applicant: Al-Amidi, Abdulhamid, Arklow Co. Wicklow (IE)
(72) Inventor: Al-Amidi, Abdulhamid, Arklow Co. Wicklow (IE)
(74) Representative: Purdy, Hugh Barry

(57) **Abstract**

A formulation for use in the biological control of insect pests comprises a cohort of infective juvenile insect-parasitic nematodes from at least three species, wherein at least two of the species are of a first genus, and at least one of the species are from a second genus, and wherein the number of species from the first genus is greater than the number of species from the second genus.

## Description

### Introduction

The invention relates to a formulation for use in the biological control of insect pests comprising a cohort of infective juvenile insect-parasitic nematodes.

### Background to the Invention

Entomopathogenic nematodes refer to nematodes that are parasitic to one or more species of insect. The most important Order of entomopathogenic nematodes is the Rhabditida, which contains several families, many of whose members are parasitic to insects. The Steinernematidae and the Heterorhabditidae are well known members of this orders (Rhabditida). Both the families, Steinernematidae and Heterorhabditidae contain several species, each specialised for attacking a specific group of insect pests (Table 1). Although the two families are not closely related, phylogenetically, both share similar life histories. The cycle begins with an infective juvenile (non-feeding juvenile), whose only function is to seek out and infect new hosts. After entering the insect via natural body openings, mouth, anus, spiracles or areas of thin cuticle, the infective juveniles release an associated mutualistic bacterium. These bacteria of the genus Xenorhabdus or Photorhabdus, associated with steinerernematides and heterorhabditids, respectively, cause host mortality within 48 hours.

The foraging strategies of entomopathogenic nematodes vary between species, and determine their soil depth distribution and host preference. In order to find hosts, infective juveniles use strategies are that vary based on ambush or cruise foraging or a combination of both. In order to ambush prey, some Steinernema species raise their bodies off the soil surface so they are better poised to attach to passing insects. Other species adopt a cruising strategy, they roam through the soil searching for potential hosts. These foraging strategies influence which hosts the nematodes infect. For example, ambush predators such as Steinernema carpocapsae infect more insects on the surface, while cruising predators like Heterorhabditis bacteriophora infect insects that live deep in the soil.

One of the major problems which arise with the use of existing, commercially available, biological control products, is that the products contain only one species of the above beneficial nematodes and, as such, are able to control only a single or one group of target insect species, make it uneconomically viable comparing with the use of chemical pesticide which control a wide range of insect species, beneficial or pests alike, in one application. Commercial growers will not adopt biological control agents that do not provide efficacy comparable with standard chemical insecticides.

It is an object of the invention to overcome at least one of the above problems.

### Statements of Invention

According to the invention, there is provided a formulation for use in the biological control of insect pests comprising a cohort of infective juvenile insect-parasitic nematodes from at least three species, wherein at least two of the species are of a first genus, and at least one of the species are from a second genus, and wherein the number of species from the first genus is greater than the number of species from the second genus.

A formulation according to the invention provides a number of advantages over known nematode formulations.

First, as the formulation comprises a majority genus (the first genus) and a minority genus (the second genus) which are in competition for insect pests, the species present from the minority genus will compete more aggressively for hosts that those from the first genus. This results in the species from the minority genus being more effective in infecting and killing insect pests. Further, it allows the formulator to tailor any given formulation for effective killing of a target insect pest by including species specifically directed to that target insect pest as the minority genus. As an example, a formulation directed to treatment of root weevil infestation of turf grass could include Steinernema riobravis, Heterorhabditis bacteriophora, and Heterorhabditis megidis, where Steinernema riobravis is a specialised parasite of the root weevil. In this formulation, as Steinernema riobravis is the representative of the minority genus, it will compete more aggressively for hosts that those from the first genus (majority), and as such will have an increased killing power compared to single nematode species when applied on its own (as an individual application outside of the formula).

Secondly, the formulations of the invention, by virtue of including at least three different species of nematode, will effectively have a broad spectrum killing power by virtue of the fact that nematode species specialised in infective killing of different varieties of nematode will be included in the formulation. Thus, taking the example above, the three species present will have an effective killing power against the following list of insect pests: root weevils, tawny mole crickets, southern mole crickets, armyworm, cutworm, webworm, wood borers, artichoke plume moth, and scarab, with a particularly effective killing power against those pests for which the minority species is a specialised killer. Thus, the formulation of the invention provide a killing efficacy which is comparable to convention chemical pesticides.

Thirdly, as the nematode species chosen for the formulation are highly specific parasites, they will not attack and kill beneficial insects. In contrast, chemical pesticides are unable to distinguish between beneficial insects and unwanted insect pests.

In a preferred embodiment of the invention, the species of nematode present in the formulation will include at least one cruiser foraging species, and at least one ambusher foraging species, or a nematode that is capable of both cruiser and ambusher foraging strategies. Typically, the formulation will include two ambusher foraging species from the same genera and one cruiser foraging species from a different genera, or two cruiser foraging species from the same genera and one ambusher foraging species from a different genera. In the specification, the term "cruiser foraging "species" is taken to mean a species of nematode that adopts a foraging strategy of roaming through the soil looking for potential hosts. Examples of cruiser foraging species include *Heterorhabditis bacteriophora, Steinernema glaseri, Steinernema Krause, Heterorhabditis megadis.* In this specification, the term "ambusher foraging species" shall be taken to mean a species of nematode that adopts a foraging strategy of raising their bodies off the surface of the soil so that they are better disposed to attach to insect pests passing along the surface of the soil. Examples of ambusher foraging species include *Steinernema carpocapsae,* and *Steinernema scapterisci.* Examples of a nematode species that that are capable of both cruiser and ambusher foraging strategies are *Steinernema riobravis,* and *Steinernema feltiae.* Thus, a formulation according to this embodiment will have an advantage of being able to attack insect pests that inhabit above the soil as well as those that inhabit below the soil, thereby enhancing the broad spectrum nature of the formulation of the invention.

Typically, the cohort of infective juvenile nematodes consists essentially of two or more species from the first genus and one species from the second genus. Thus, for example, the cohort may comprise 3, 4, 5, 6, 7, 9, or 10 species from one genus, and one species from the second genus. Alternatively, the cohort may comprise n+1 number of species of the first genus, and n number of species from the second genus. Alternatively, the cohort may comprise X number of species from the first genus, and Y number of species from the second genus, where X and Y are whole numbers and X > Y. In this way, the species from the second genus will be in a minority in the formulation, and will therefore have to compete more strongly than the species of the first genus. This results in the species of the minority genus having a grater destructive action, as when compared to the same single nematode species if applied on its own (that is to say, in a comparatively equal quantity, as an individual application outside of the formula, for example a species of Y individually and separately applied).

In a preferred embodiment of the invention, the cohort of infective juvenile nematodes consists essentially of two species from the first genus and one species from the second genus.

Typically, the first and second genus are selected from the group comprising: Steinernematidae; and Heterorhapditidae.

In one embodiment of the invention, the first genus is Steinernematidae and the second genus is Heterorhapditidae. Typically, the two or more species of Steinernematidae are selected from the group comprising: *Steinernema feltiae; Stinernema scapterisci; Steinernema riobravis; Steinernema carpocapsae.* Ideally, the two species of Steinernematidae consist of *Steinernema feltiae* and *Steinernema carpocapsae.*

Suitably, the at least one species of Heterorhapditidae is selected from the group comprising: *Heterorhabditis megidis;* and *Heterorhabditis bacteriophora.* Ideally, the at least one species of Heterorhapditidae consists of *Heterorhabditis bacteriophora.*

In another embodiment of the invention, the first genus is Heterorhapditidae and the second genus is Steinernematidae. In this case, typically the two species of Heterorhapditidae are selected from the group comprising: *Heterorhabditis megidis;* and *Heterorhabditis bacteriophora.* Suitably, the at least one species of Steinernematidae is selected from the group comprising: *Steinernema feltiae; Stinernema scapterisci; Steinernema riobravis; Steinernema carpocapsae.* Ideally, the at least one species of Steinernematidae is selected from the group comprising: *Steinernema feltiae; and Steinernema carpocapsae.*

In one particularly preferred embodiment of the invention, the cohort of infective juvenile nematodes consists essentially of *Steinernema feltiae, Steinernema carpocapsae,* and *Heterorhabditis bacteriophora.*

Suitably, the formulation additionally comprises a suitable media for the nematodes. Typically, the media is selected from the group comprising vermiculite, fine clay, water, and other types of suitable media. Generally, the media will comprise between 10 and 15% of the formulation.

The invention also relates to a packaged product comprising a formulation according to the invention. Typically, the packaged product further comprises instructions for a user to apply the formulation to a desired ecosystem.

The invention also relates to a method for the biological control of target insect and/or soil borne infestations of agricultural products, which method employs a biological control formulation according to the invention, the method comprising the step of applying the biological control formulation to the soil or other media in which the agricultural product is growing. The method is especially suitable for the treatment of insect pests that are especially targeted by each minority species in the formulation. Thus, in the case of a formulation consisting of *Steinernema feltiae, Steinernema carpocapsae,* and *Heterorhabditis bacteriophora,* where the latter is the minority species, this formulation would be especially suitable for treating Root weevils, Wood borers, and/or Scarabs. However, it should be noted that while the formulation would be especially suitable for treating the target insect pest, because the formulation includes two other species of nematode, it will also be effective in killing insect pests for which the latter two species of nematode are specialised killers. Thus, in the above example, the formulation would also provide effective action against a number of different insect pests, including Sciarid larvae, fungus gnats, armyworm, cutworm etc.

Thus, in one embodiment, the target insect is one or more of Sciarid larvae and Fungus gnats, and wherein the cohort of infective juvenile nematodes consists of *Steinernema felitae* and two species of Heterorhabditidae.

In another embodiment, the target insect is one or more of the Tawny mole cricket and the Southern mole cricket , and wherein the cohort of infective juvenile nematodes consists of *Steinernema scapterisci* and two species of Heterorhabditidae.

In another embodiment, the target insect is one or more of Root weevils, the Tawny mole cricket, and the Southern mole cricket, and wherein the cohort of infective juvenile nematodes consists of *Steinernema riobravis,* and two species of Heterorhabditidae.

In another embodiment, the target insect is a Root weevil, and wherein the cohort of infective juvenile nematodes consists of *Heterorhabditis megidis,* and two species of Steinernematidae.

In another embodiment, the target insect is one or more of Armyworms, Cutworms, Webworms, Root weevils, Wood borers, Artichokes, and Plume moths, and wherein the cohort of infective juvenile nematodes consists of *Steinernema carpocapsae* and two species of Heterorhabditidae.

In another embodiment, the target insect is one or more of Root weevils, Wood borers, and Scarabs, and wherein the cohort of infective juvenile nematodes consists of *Heterorhabditis bacteriophora* and two species of Steinernamitidae.

The invention also relates to a use of a formulation according to the invention to treat one or more of Sciarid larvae and Fungus gnats, wherein the cohort of infective juvenile nematodes consists of *Steinernema felitae* and two species of Heterorhabditidae.

In all of the above examples, the formulation would have a formidable killing effect against the target insect pest, and an effective killing effect against many other insect pests, for which the two species from the majority genus would be effective against.

The invention also relates to a use of a formulation according to the invention to treat one or more of the Tawny mole cricket and the Southern mole cricket , and wherein the cohort of infective juvenile nematodes consists of *Steinernema scapterisci* and two species of Heterorhabditidae.

The invention also relates to a use of a formulation according to the invention to treat one or more of Root weevils, the Tawny mole cricket, and the Southern mole cricket, and wherein the cohort of infective juvenile nematodes consists of *Steinernema riobravis,* and two species of Heterorhabditidae.

The invention also relates to a use of a formulation according to the invention to treat a Root weevil, and wherein the cohort of infective juvenile nematodes consists of *Heterorhabditis megidis,* and two species of Steinernematidae.

The invention also relates to a use of a formulation according to the invention to treat one or more of Armyworms, Cutworms, Webworms, Root weevils, Wood borers, Artichokes, and Plume moths, and wherein the cohort of infective juvenile nematodes consists of *Steinernema carpocapsae* and two species of Heterorhabditidae.

The invention also relates to a use of a formulation according to the invention to treat one or more of Root weevils, Wood borers, and Scarabs, and wherein the cohort of infective juvenile nematodes consists of *Heterorhabditis bacteriophora* and two species of Steinernamitidae.

In a particularly preferred embodiment of the invention, there is provided a formulation for use in the biological control of insect pests comprising a cohort of infective juvenile insect-parasitic nematodes from at least three species, wherein at least two of the species are of a first genus, and at least one of the species are from a second genus, wherein the number of species from the first genus is greater than the number of species from the second genus, and wherein the formulation comprises at least one ambusher foraging species of nematode and at least one foraging species of nematode, or at least one nematode species that is capable of both cruiser and ambusher foraging strategies.

### Detailed Description of the Invention

The Steinernematidae and Heterorhabditidae genera contain several species, each specialised for attacking a specific type or group of insect pests (Table 1) . The formulations of the invention, by virtue of comprising at least three different species of nematode, thereby provide a broad spectrum effect against a number of types and classes of insect pests.

**Table 1**

| Current use of beneficial nematodes as biological control agents | | | |
|---|---|---|---|
| **Nematode Species** | **Foraging strategy** | **Insect pest** | **Commodity** |
| *Steinernema feltiae* | both ambusher and cruiser | Sciarid larvae, Fungus gnats. | Mushrooms, Ornamentals |
| *Steinernema scapterisci* | ambush forager | Tawny mole cricket, Southern mole cricket. | Turf grass |
| *Steinernema riobravis* | both ambusher and cruiser | Root weevils, Tawny mole cricket, Southern mole cricket. | Citrus, Turf grass |
| *Steinernema carpocapsae* | ambush forager | Armyworm, Cutworm, Webw orm, Root weevils Wood borers, Artichokes plume moth. | Ornamentals, Cranberries |
| *Steinernema glaseri* | cruiser forager | coleopterous larvae, particularly scarabs | Citrus, Turf grass |
| *Steinernema kraussei* | cruiser forager | Vine weevil. | Gardens, Ornamenals |
| *Heterorhabditis megidis* | cruiser forager | Root weevils. | Ornamentals |
| *Heterorhabditis bacteriophora* | cruiser forager | Root weevils, Wood borers, Scarabs. | Ornamentals, Berries, Turf grass |

### Other species of nematodes for use in formulations of the invention include:

### Steinernema species

*Steinernema oregonense, Steinernema anomaly, Steinernema intermedia, Steinernema rarum, Steinernema kushidai, Steinernema abbasi, Steinernema bicomutum, Steinernema siamkayai, Steinernema arenarium, Steinernema cubanum, Steinernema glaseri, Steinernema karii, Steinernema puertoricense.*

### Heterorhabditis species

*Heterorhabditis Ha waiians, Heterorhabditis indicus, Heterorhabditis zealandica, Heterorhabditis downesi, Heterorhabditis marelatus, Heterorhabditis baujardi, Heterorhabditis floridness, Heterorhabditis Mexicana.*

### Methods for Producing Infective Juvenile Insect-Parasite Nematodes

For small-scale field-testing, in vivo production (as described by Woodring and Kaya (1988)-"Steinernematids and Heterorhabditids Nematodes: Handbook of Biology and Techniques". Southern Cooperative Bulletin 331, Arkanass Agricultural Experimental Station, Fayettville, Arkansas, 30 pp.), is used to produce a large number of non-feeding infective juveniles.

### Infecting:

The above method involves infecting insect-larvae (meal worm or Galleria larvae) with infective juveniles of the beneficial nematodes (steinernematids or heterorhabditids). The infective juveniles are first left to warm to room temperature (20-25 °C) in an aqueous suspension. Then a selected number of these nematode juveniles are transferred to specially prepare plastic containers in which a sheet of blotting paper is placed inside. Next the insect larvae are added to give a ratio of some twenty nematodes for every insect larva. The lid is replaced and the container is incubated at 25 °C for some six to eight days.

### Harvesting the new generation of juvenile nematodes:

The infected insect larvae are transferred to a water trap and over a period of 10-12 days, following infection, the new juveniles migrate from the host larvae into the water. Soon after they appear they can be easily harvested. The harvested nematodes are surface sterilised and washed several times before they are mixed together. The sterilant used comprises 0.1% Milton solution and washing is carried out using distilled water.

After harvesting, the nematodes are packed in vermiculite, and packaged in plastic containers which are sealed with a permeable film for storage and transport. However, other media and packaging forms may be employed, and suitable examples of such media and packaging will be well known to those skilled in the art.

In a preferred embodiment, the following nematodes are use in formulation of the invention; two or more species of either the Steinernema genus or Heterorhabditis genus are combined with one species from the other genus, thus ensuring that the formulation of the invention has the following combined features:
Optimum foraging capacity- combining *Steinernema carpocapsae* with *Steinernema feltiae* and *Heterorhabditis bacteriophora* in such a way to ensure optimum foraging activity is achieved and that ambush and cruising modes are effective;
The product composition is such that two or more members from one of the families (eg *Steinernema carpocapsae and Steinernema feltiae*) competes with just one member from the other family (eg *Heterorhabditis bacteriophora*);
Optimising the synergy resulting from combining three or more species in vermiculite, fine clay, water or other media.

The formulation of the invention contains three or more of the beneficial nematode species of Steinernema spp. and/or Heterorhabditis spp. mixed together in one pack, and provides a low cost and easily applicable method for controlling a wide rage of insect soil pests.

The formulation of the invention is capable of controlling several groups of target insect pest plants in one application. When applied in a specific soil, the juvenile nematode of each species (eg; *Steinernema carpocapsae, Steinernema feltiae, Heterorhabditis bacteriophora*) will seek its target pest species, including:
Lepidopterous larvae including; webworms, cutworms, armyworms, girdlers, and wood-borers. (*Steinernema carpocapsae, Heterorhabditis bacteriophora*);
Dipterans larvae, including mushroom flies larvae (sciarid larvae), gall midge (cecid larvae), fungus gnats, cabbage root maggots, and tipulids. (Steinernema feltiae); and
Coleopteran larvae; scarabs, billbugs, root weevils, black vine weevils, wood borers Colorado potato beetle, cucumber beetle, European chafer, flea beetle strawberry root weevil, sugarcane stalk borer, sweet potato weevil, various tree and vine borers. (*Heterorhabditis bacteriophora*).

Other insect pest that may be targeted by the formulation of the invention include ants (workers, larvae and queens), and pets adults fleas.

The formulation of the invention achieves similar effectiveness as a chemical pesticide in respect of:
- Spectrum of target insect pests;
- Single application; and
- Low cost, one pack of the formulation of the invention as against multi packs of other beneficial nematodes sold in the market. Furthermore, the formulation of the invention, unlike chemical pesticides, effectively distinguishes between beneficial insects and insect pests.

The cohort of species in the formulation of the invention typically has two or more members from one family (eg; , *Steinernema carpocapsae* and *Steinernema feltiae)* competing with just one member (species) from the other family, Heterorhabditidae, and this competitive dynamic results in a greatly increased destructive action on the part of the single member ( e.g. *Heterorhabditis bacteriophora*). The net killing power with this assemblage is greater than the killing power resultant from using a combination of a single species from two genera.

This formulation of the invention may be used to control insect pest species found in domestic greenhouses and gardens, and in commercial greenhouses and farms. The formulation may be especially applicable for use with nursery stocks, turf grass, strawberries, cranberries, indoor or outdoor pot plants or grow bags suffering from soil insect pests attacks, and garden insect pests.

Specific examples of formulation according to the invention are provided below:
**A- Formulations:** 2 cruiser forager + 1 ambush forager
   A1: *Heterorhabditis megidis , Heterorhabditis bacteriophora and Steinernema feltiae*
      This formulation would control insect pests selected from the group comprising Dipterous insects, including mushroom flies, fungus gnats, and tipulids, Lepidopterous which includes Armyworm, Cutworm, webworms, Caterpillar borers,
      Coleopterous insect larvae, Root weevils, Citrus weevils, Black vine weevils, chafers, Scarabs, Hymenoptera, and queen ants/termites.
   A2: *Heterorhabditis megidis , Heterorhabditis bacteriophora and Steinernema carpocapsae*
      This formulation would be capable of controlling Dipterous insects, including fungus gnats, and tipulids, Lepidopterous which may includes Armyworm, Cutworm, webworms, Caterpillar borers, Coleopterous insect larvae, Root weevils, Citrus weevils, Black vine weevils, chafers, Scarabs, Hymenoptera, and queen ants/termites
**B-Formulations:** 2 ambush forager + 1 cruiser forager
   B1: *Steinernema feltiae, Steinernema carpocapsae* + *Heterorhabditis bacteriophora*
      This formulation is capable of controlling Dipterous insects, including mushroom flies, fungus gnats, and tipulids, Lepidopterous which may includes Armyworm, Cutworm, webworms, Caterpillar borers, Coleopterous insect larvae, Root weevils, Citrus weevils, Black vine weevils, chafers, Scarabs, and Hymenoptera, queen ants/termites.
   B2: *Steinernema scapterisci, Steinernema carpocapsae* + *Heterorhabditis bacteriophora*
      This formulation is capable of controlling Dipterous insects, including fungus gnats, and tipulids, Lepidopterous which may includes Armyworm, Cutworm, webworms, Caterpillar borers, Coleopterous insect larvae, Root weevils, Citrus weevils, Black vine weevils, chafers, Scarabs, Hymenoptera, queen ants/termites, and Orthoptera, including the Tawny mole cricket and the Southern mole cricket.

### Application for Formulations A: (Based on small package 30 millions of infective juvenile nematodes)

As nematodes need moisture in the soil for movement (if the soil is too dry or compact, they may not able to search out hosts), watering the insect-infested area before or immediately after applying the formulation of the invention is advised, as it keeps the soil moist and helps the juvenile nematodes to move deeper into the soil. Care should be taken not to soak the area because nematodes in too much water cannot infect. There is no need for masks or specialized safety equipment, as the formulations of the invention are safe for plants and animals (birds, pets, children).

### Mixed with Compost.

A Before sowing or planting, or
B While the crop is growing.
The formulations of the invention may be applied to the ground before sowing or planting (in which case they are known as base dressing) or while the crop is growing, as top dressing. Dosage: 1 box of the formulation, mixed well with 160-200 litres of loose moist compost, which may be used in base dressing or in top dressing. Similar application may be applied for making out or in-door pots.

### Insert in Pots or Grow Bags.

Insert 1 spoon (one gram) of the formulated invention product in each pot; treating up to 200 pots (1 litre pot) or 3 spoons in each grow bag treating up to 60-70 grow bags.

### Insert in the Soil.

Scoop the soil to make a small holes 5-10 cm deep (using a small trowel) and 1 meter apart a around the garden. Insert 2 spoons of the formulation in each hole and gently firm the soil with the hand.

Chemical Fertilizers should be avoided roughly 2 weeks prior to and after nematode application, because they may be adversely affected by high nitrogen content.

### Storage and handling.

In general, formulations of the invention should be stored in a cool refrigerator 2-5 °C, and should not be allowed to freeze.
1 Keep in a dry place out of direct sunlight and not to be exposed to extreme temperatures.
2 Mix all the ingredients (contents) gently before use and keep away from direct sunlight.
3 Use Before Expiry Date.

Application for Formulations B: (Based on medium package 45 millions of infective juvenile nematodes).

Open a pack of the formulation of the invention and empty the entire contents (nematodes and fine soil) into a bucket or watering can, containing 4-5 litres of tap water. Mix well and leave it for 5-10 minutes to soak, mix well again and pour the entire content through a fine sieve into a spray tank and adjust to the required amount of water, stir well and spray onto the target area immediately.

Formulations of the invention may be packaged in various quantities, including:
A- Small size containing 30 millions of infective juvenile nematodes in vermiculate (as inert carrying material), may treat 160-200 small pots or 60-70 square metres.
B- Standard size containing 45 millions of infective juvenile nematodes, may treat 100 square metres.
C- Large size containing 90 millions of infective juvenile nematodes fine soil (as inert caring, may treat 200 square metres.

The invention is not limited to the embodiments hereinbefore described which may be varied in both construction and detail without departing from the spirit of the invention.

## Claims

1. A formulation for use in the biological control of insect pests comprising a cohort of infective juvenile insect-parasitic nematodes from at least three species, wherein at least two of the species are of a first genus, and at least one of the species are from a second genus, and wherein the number of species from the first genus is greater than the number of species from the second genus.

2. A formulation as claimed in claim 1 in which cohort of infective juvenile nematodes consists essentially of two species from the first genus and one species from the second genus.

3. A formulation as claimed in any preceding Claim in which the formulation comprises at least two ambusher foraging species of nematode of the same genus and at least one cruiser foraging species of nematode from the other genus, or at least one nematode species that is capable of both cruiser and ambusher foraging stratgies.

4. A formulation as claimed in Claim 3 in which the formulation comprises at least one ambusher foraging species of nematode from a first genus and at least two cruiser foraging species of nematode from a different genus, or at least two ambusher foraging species of nematode from the same genus and at least one cruiser foraging species of nematode from a different genus.

5. A formulation as claimed in any preceding Claim in which the first and second genus are selected from the group comprising: Steinernematidae; and Heterorhapditidae.

6. A formulation as claimed in Claim 1 and selected from the group comprising:
(a) *Heterorhabditis megidis , Heterorhabditis bacteriophora and Steinernema feltiae;*
*(b) Heterorhabditis megidis , Heterorhabditis bacteriophora and Steinernema carpocapsae;*
*(c) Steinernema feltiae, Steinernema carpocapsae + Heterorhabditis bacteriophora; and*
*(d) Steinernema scapterisci, Steinernema carpocapsae + Heterorhabditis bacteriophora.*

7. A formulation as claimed in any preceding Claim and further comprising a suitable media for the nematodes.

8. A packaged product comprising a formulation as claimed in any of Claims 1 to 7.

9. A packaged product as claimed in Claim 8 and further including instructions for a user to apply the formulation to a desired ecosystem.

10. A method for the biological control of target insect pest and/or soil borne insect pest infestations of agricultural products, which method employs a biological control formulation according to any of Claims 1 to 7, comprising the step of applying the biological control formulation to the soil or other media in which the agricultural product is growing.
